# EUROPEAN PATENT APPLICATION

(11) **EP 1 860 405 A2**
(43) Date of publication of application: **28.11.2007**
(21) Application number: 07108825.6
(22) Date of filing: 24.05.2007
(51) Int. Cl.: G01C 21/36

(54) **Method of setting a navigation terminal for a destination and an apparatus therefor**

(30) Priority: 25.05.2006 KR 20060047207
(71) Applicant: Samsung Electronics Co., Ltd., Suwon-si Gyeonggi-do (KR)
(72) Inventor: Jeon, Byoung-Ki, Gyeonggi-do (KR); Lee, Kook-Yeon, Gyeonggi-do (KR); Kim, Jin-Won, Gyeonggi-do (KR)
(74) Representative: Zimmer, Franz-Josef

(57) **Abstract**

Disclosed is a method of setting a navigation terminal for a destination using voice recognition, which includes the steps of causing the navigation terminal to produce a guidance voice for requesting a voice input of the destination, causing the navigation terminal to receive the voice input, causing the navigation terminal to set the destination as a path search destination if the destination extracted from the voice input is found in a destination list previously stored, and if the extracted destination is not found in the destination list, causing the navigation terminal to receive a reference item inputted by the user corresponding to at least a destination classification reference for setting a part of a plurality of destinations previously stored corresponding to the reference item as a search range and to search out the destination corresponding to the extracted destination in the search range for setting it as the path search destination.

## Description

The present invention relates to a navigation terminal, and more particularly to a method for setting a navigation terminal for a destination by using voice recognition technology.

A desire for a comfortable life has contributed to technological advances in various fields. One of these fields is voice recognition technology, which has been developed and applied to various fields. Recently, voice recognition technology has started being applied to digital apparatuses. For example, mobile communications terminals are provided with a voice recognition device for call initiation.

Recently, telematics technology, i.e. the combination of telecommunications and informatics, has also been rapidly developed, which may provide vehicles such as cars, airplanes and ships with radio data services by via computer, radio communication device, GPS (Global Positioning System) and internet together with text-to-speech conversion technology. Especially useful are the automobile telematics services attained by applying the mobile communications and GPS to the automobile to enable the driver to receive information concerning traffic accidents, robbery, traveling directions, traffic, daily lives, sports games, etc., in real time. For example, if the automobile breaks while traveling, this service enables the driver to send information regarding the malfunction through radio communication to an automobile service center and to receive an email or a road map displayed on a monitor viewable by the driver.

Meanwhile, in order for the telematics services to enable the driver to search the road map using of a voice recognition device, the computer or navigation terminal must have sufficient resources to search several tens or hundred of thousands of geographic names. However, the navigation terminals presently available are very limited in said resources, to the degree that they can recognize only about ten thousand words in a single stage. Hence, the conventional navigation terminals that carry out voice recognition through the telematics system based on the existing fixed or variable search network are unable to process several hundred thousand words, and are limited only to carrying out mode-change commands and calling up by using the names or phone numbers stored in the mobile terminal.

It is the object of the present invention to provide a method and apparatus for setting a navigation terminal for a path search destination by means of voice recognition.

This object is solved by the subject matter of the independent claims.

Preferred embodiments are defined in the dependent claims.

It is an aspect of the present invention to provide a method and apparatus for setting a navigation terminal for a destination by means of voice recognition applied only to one of limited word groups into which a number of words representing geographic names are classified.

According to an aspect of the present invention, a method of setting a navigation terminal for a destination by means of voice recognition includes causing the navigation terminal to produce a guidance voice for requesting a voice input of the destination; causing the navigation terminal to receive the voice input; causing the navigation terminal to set the destination as a path search destination if the destination extracted from the voice input is found in a destination list previously stored, and if the extracted destination is not found in the destination list, causing the navigation terminal to receive a reference item inputted by the user corresponding to at least a destination classification reference for setting a part of a plurality of destinations previously stored corresponding to the reference item as a search range, and to search out the destination corresponding to the extracted destination in the search range for setting it as the path search destination.

According to another aspect of the present invention, a method of setting a navigation terminal for a destination by means of voice recognition includes the following seven steps of causing the navigation terminal to produce a guidance voice for requesting a voice input of the destination; causing the navigation terminal to receive the voice input; causing the navigation terminal to set the destination as a path search destination if the destination extracted from the voice input is found in a destination list previously stored; causing the navigation terminal to produce a guidance voice for requesting an input of the highest level administrative district if the extracted destination is not found in the destination list, to extract a first administrative district item from a first administrative district item voice inputted by the user, and to set a part of a plurality of destinations previously stored as a path search range by considering their geographic positions with reference to the administrative district item; causing the navigation terminal to produce a guidance voice for requesting an input of the next highest level administrative district, to extract a second administrative district item from a second administrative district item voice input by the user, and to reduce the path search range by considering the geographic positions of the part of a plurality of destinations with reference to the second administrative district item; causing the navigation terminal to repeat the previous step until the final path search range is set corresponding to the lowest administrative district prescribed; and causing the navigation terminal to detect the destination corresponding to the extracted destination in the final search range for setting it as the path search destination.

According to yet another aspect of the present invention, an apparatus for setting a navigation terminal for a destination by means of voice recognition includes a memory part for storing a destination list and a plurality of destinations arranged in voice recognition data format; and a voice recognition device for producing a guidance voice for requesting a voice input of the destination, extracting the destination from the voice of the destination inputted by the user, delivering the destination as a path search destination to a path calculator if the destination extracted from the voice input is found in the destination list, receiving a reference item inputted by the user corresponding to at least a destination classification reference if the extracted destination is not found in the destination list, setting a part of the plurality of destinations previously stored corresponding to the reference item as a search range, and searching out the destination corresponding to the extracted destination in the search range delivered to the path calculator to be set as the path search destination.

According to a further aspect of the present invention, an apparatus for setting a navigation terminal for a destination by means of voice recognition includes a memory part for storing a destination list and a plurality of destinations arranged in voice recognition data format; and a voice recognition device for producing a guidance voice for requesting a voice input of the destination, delivering the destination corresponding to the extracted destination to a path calculator to be set as a path search destination if the destination extracted from the voice input is found in the destination list previously stored, producing a guidance voice for requesting a input of the highest level administrative district if the extracted destination is not found in the destination list, extracting a first administrative district item from a first administrative district item voice input by the user, setting a part of the plurality of destinations previously stored as a path search range by considering their geographic positions with reference to the administrative district item, producing a guidance voice for requesting a input of the next highest level administrative district until the final path search range is set corresponding to the lowest administrative district prescribed, extracting a second administrative district item from a second administrative district item voice inputted by the user, reducing the path search range by considering the geographic positions of the part of the plurality of destinations with reference to the second administrative district item, and detecting the destination corresponding to the extracted destination in the final search range delivered to the path calculator to be set as the path search destination.

The present invention will become more apparent from the following detailed description when taken in conjunction with the accompanying drawing in which:
FIG. 1 is a block diagram illustrating the structure of a navigation terminal according to an embodiment of the present invention;
FIG. 2 is a flowchart illustrating the operation of a navigation terminal according to an embodiment of the present invention;
FIG. 3 is a flowchart illustrating the process of setting a voice data search range with reference to an administrative district according to an embodiment of the present invention; and
FIG. 4 is a flowchart illustrating the operation of a navigation terminal after setting the final voice data search range according to an embodiment of the present invention.

Preferred embodiments of the present invention will be described herein below with reference to the accompanying drawings. In the drawings, the same or similar elements are denoted by the same reference numerals even though they are depicted in different drawings. In the following description, well-known functions or constructions are not described in detail since they would obscure the invention in unnecessary detail.

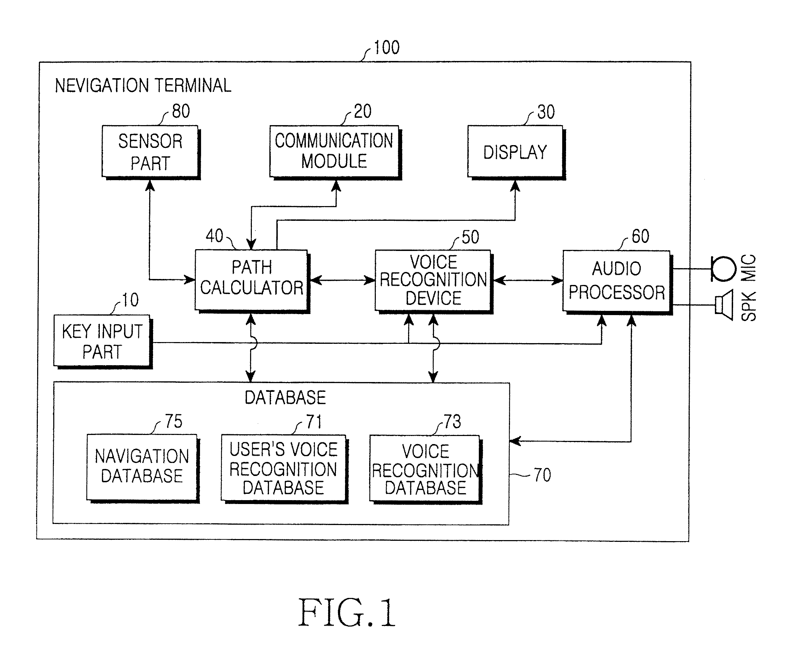

Referring to Fig. 1, the structure of a navigation terminal 100 according to the present invention includes a sensor part 80, a communication module 20, a display 30, a key input part 10, a path calculator 40, a voice recognition device 50, an audio processor 60, and a memory part 70.

The sensor part 80 for seeking out and determining the present location of the navigation terminal 100 includes a GPS (Global Positioning System) sensor and a DR (Dead Reckoning) sensor. The GPS sensor detects positional and temporal information (x, y, z, t) of a moving body based on GPS signals, and the DR sensor is to find out the present position and direction of a moving body relative to the previous position by detecting velocity (v) and angle (θ) of the moving body. Thus, the sensor part 80 locates a vehicle based on the positional and temporal information (x, y, z, t) obtained by the GPS sensor and the velocity (v) and angle (θ) obtained by the DR sensor. The communication module 20 performs radio communication through a mobile communications network, enabling the navigation terminal to communicate with another terminal and to receive the traffic or geographic information from a path information server.

The display 30 displays on a screen the information received through a mobile communications network, calculated path information, or images stored in the memory part 70 under the control of the path calculator 70. The key input part 10 may consist of a keypad or touch panel, interfacing the user with the navigation terminal 100. The user operates the key input part 10 to input a starting place, a destination, a traveling path, a specific interval, and other options so as to deliver corresponding signals to the path calculator 40. The audio processor 60 includes a voice synthesis module such as a TTS (Text To Speech) module to convert the data stored in the memory part 70 into the corresponding synthesized audio signals outputted through a speaker SPK, and to process the audio signals inputted through a microphone (MIC) delivered to the voice recognition device 50.

The memory part 70 stores the process control program of the navigation terminal 100, reference data, other various data capable of being revised, and the paths calculated by the path calculator 40, also serving as a working memory for the path calculator 40. The memory part 70 also stores the program data relating to the voice recognition function provided in the navigation terminal 100, as well as voice recognition data. The voice recognition data correspond with the words used in the voice recognition mode of the navigation terminal 100. According to an embodiment of the present invention, the memory part 70 includes a navigation database 75, a user's voice recognition database 71, and a voice recognition database 73.

The navigation database 75 for storing the information necessary for the navigation function contains geographic information consisting of geographic data representing roads, buildings, installations, and public transportation, and the traffic information on the roads, the information being updated by data received from a path information center.

The user's voice recognition database 71 stores a destination list of the recently searched paths and a user's destination list set by the user. The user's destination list contains the destination names registered directly by the user corresponding to the destinations selected by the user. The destinations contained in the late destination list and user's destination list are stored in voice recognition data format.

The voice recognition database 73 stores the guidance voice data provided to the user in the voice recognition mode of the navigation terminal, and the voice recognition data corresponding to all destinations set in the navigation terminal 100. The destinations stored in the voice recognition database 73 are formatted into corresponding voice recognition data, and may be classified according to at least an arbitrary classification reference, which may be an administrative district, business category, or in consonant order. Accordingly, each destination may be stored with tags corresponding to possible classification references and classification reference items in the voice recognition database 73. For example, if the classification reference is a Korean administrative district, destination "A" is stored with tags representing detailed information relating to the classification reference items "Do", "City", "Goon", "Gu", "Eup", "Myeon", "Dong", etc., according to the actual geographic location. Alternatively, according to another embodiment of the present invention, each destination may be stored in a storage region predetermined according to a prescribed classification reference and reference item in the voice recognition database 73. For example, if the classification reference is a Korean administrative district, the destinations may be stored in the storage regions allocated respectively for the administrative districts of "Do", "City", "Goon", "Gu", "Eup", "Myeon", "Dong", etc. according to the actual geographic locations in the voice recognition database 73. These Korean administrative districts correspond with European classifications such as "province", "city", "county", "district", "town", "township", "neighborhood", etc. and can be applied in the same way as the above-mentioned Korean administrative districts.

The path calculator 40 controls all of the functions of the navigation terminal 100, carrying out the functions corresponding to a plurality of menu items provided in the navigation terminal, especially in the voice recognition mode. The path calculator 40 calculates the path between the starting place and the destination set by means of the key input part 10 or the voice recognition device 50 according to the full path option and a specific path interval option.

The voice recognition device 50 analyzes the audio signal received from the audio processor 60 in the voice recognition mode of the navigation terminal 100 to extract characteristic data of the voice interval between the starting and the ending point of the audio signal, except mute intervals before and after the audio signal, and then processes the character data in real time vector quantization. Thereafter, the voice recognition device 50 searches the words registered in the memory part 70 to select a word most similar to the character data, and then delivers the voice recognition data corresponding to the selected word to the path calculator 40. The path calculator 40 converts the voice recognition data into a corresponding character signal displayed in the display 30, or carries out the function set corresponding to the voice recognition data, according to the functional mode presently set of the navigation terminal 100. The voice recognition device 50 retrieves, from the memory part 70, the guidance voice data delivered to the audio processor 60 to output the guidance voice required for the operation of the navigation terminal 100. The audio processor 60 converts the voice recognition data into the corresponding synthesized voice signal under the control of the voice recognition device 50. The voice recognition device 50 also searches the user's voice recognition database 71 to find voice recognition data corresponding to the destination voice inputted by the user for a path search in the voice recognition mode of the navigation terminal, and then delivers the destination represented by the voice recognition data to the path calculator 40 to calculate the path. Otherwise, if voice recognition data corresponding to the voice destination from the user's voice recognition database 71 is not searched for, the voice recognition device 50 synthesizes a guidance voice representing a classification reference based on which the destinations stored in the voice recognition database 73 are classified, and analyzes the reference item voice inputted by the user in response to the guidance voice. Then, the voice recognition device 50 classifies the voice recognition data corresponding to a plurality of destinations stored in the voice recognition database 73 according to the inputted reference item, so as to reduce the voice data search range where the voice data corresponding to the destination is searched out and delivered to the path calculator 40.

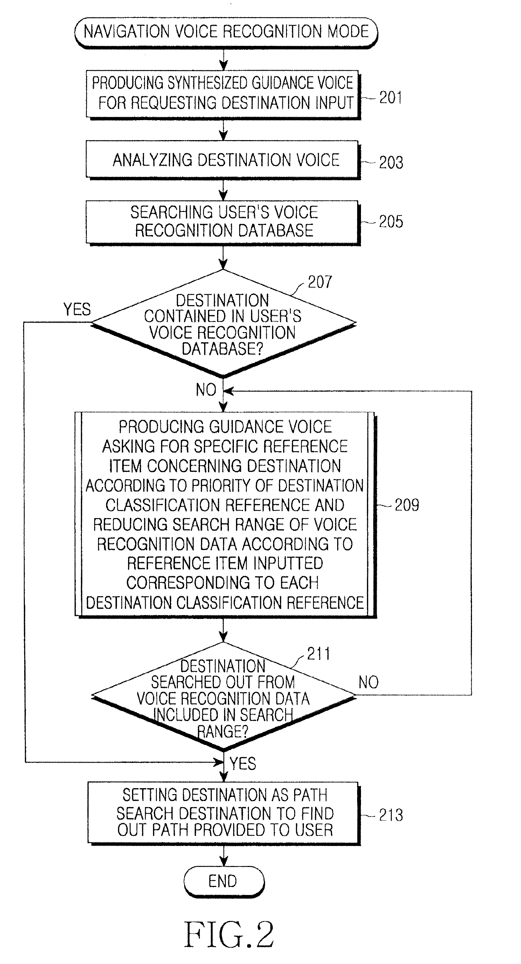

Referring to Fig. 2, a process is described of the navigation terminal providing a path to the destination, according to an embodiment of the present invention. The user may set the navigation terminal to the voice recognition mode utilizing the key input part 10 or a voice command. The path calculator 40 sets the voice recognition mode of the navigation terminal upon the user's request. In the navigation voice recognition mode, the voice recognition device 50 controls, in step 201, the audio processor 60 to produce a synthesized guidance voice for requesting the user to input a destination, e.g., "Select your destination." Then, the user voices a desired destination through the microphone (MIC). The voice recognition device 50 analyzes the destination voice to extract the destination in step 203. Then, the voice recognition device 50 searches, in step 205, the last used destination list and the user's destination list stored in the user's voice recognition database 71 to find the voice recognition data corresponding to the destination. If the voice recognition data is found, the voice recognition device 50 proceeds to step 213. Otherwise, it proceeds to step 209. The voice recognition device 50 delivers, in step 213, the voice recognition data corresponding to the destination to the path calculator 40, which sets the destination as a path search destination to find out the path provided to the user.

Alternatively, in step 209, the voice recognition device 50 produces voiced destination classification references sequentially from the highest level classification reference downwards in order to reduce the voice data search range according to the reference item voices input corresponding to the classification references, then proceeds to step 211. The highest level classification reference means the largest classification category with the highest classification priority. For example, if the destination classification reference is an administrative district, the priority order may be a sequence of "Do", "City", "Goon", "Gu", "Eup", "Myeon", "Dong", or otherwise, the priority order may be the consonant order. Hence, if the destination classification reference is set for the administrative district, the voice recognition device 50 produces the guidance voice asking the user to input a specific reference item concerning the destination in the order of "Do", "City", "Goon", "Gu", "Eup", "Myeon", "Dong". Then, the voice recognition device 50 searches only the voice recognition data with the tag representing the inputted reference item, or it selects the storage region corresponding to the input reference item for a search range, thereby reducing the search range from the whole voice recognition data to a part thereof. Subsequently, if the voice recognition device 50 searches the voice recognition data corresponding to the destination in the search range in step 211, it proceeds to step 213 to carry out the path search, or otherwise, it repeats step 209.

As described above, the navigation terminal 100 classifies the voice data representing a plurality of destinations according to the classification reference item inputted by the user so as to set the search range of the voice recognition data for searching out the destination. Thus, the inventive method reduces the quantity of the voice recognition data actually searched, so that it may be applied to the navigation terminal 100 having very limited resources that can provide voice recognition of only about ten thousand words in a single stage.

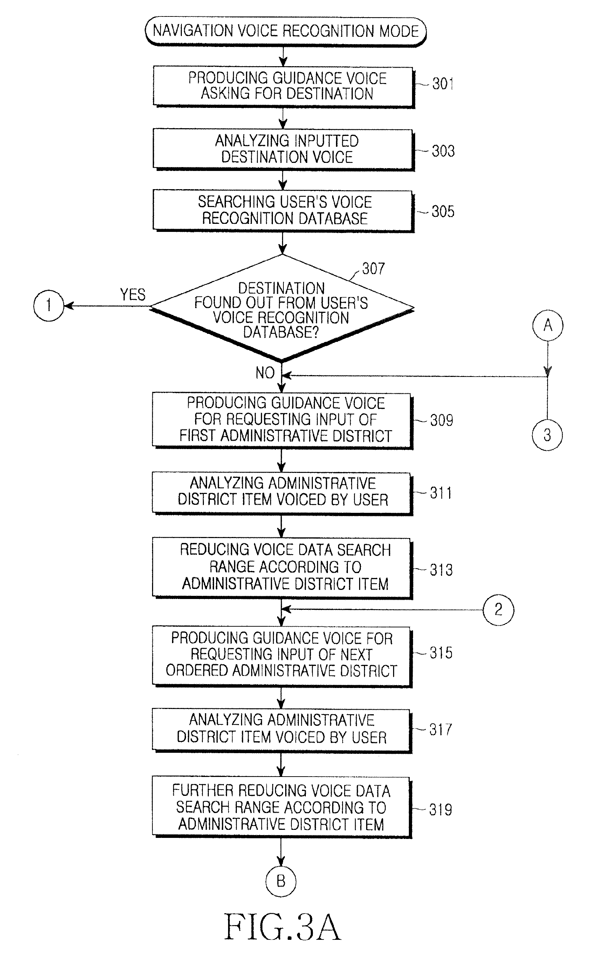

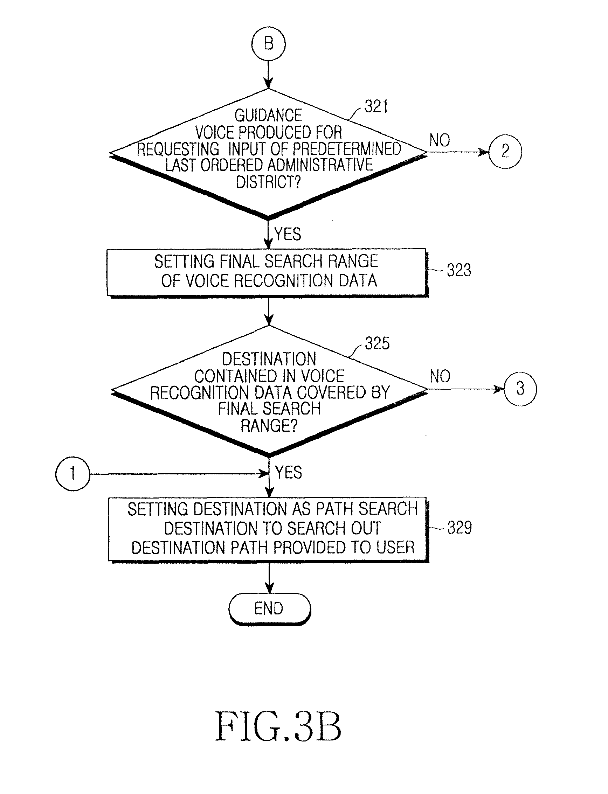

Referring to Fig. 3, there is described a process of searching out the destination path in the navigation voice recognition mode according to a specific classification reference item in the destination classification reference of administrative district, according to an embodiment of the present invention. The drawing is shown in Two parts, Figs. 3A and 3B, showing the operation of the navigation terminal setting the search range of the voice data with reference to the administrative district.

In the navigation voice recognition mode, the voice recognition device 50 controls, in step 301, the audio processor 60 to produce a synthesized guidance voice asking for a destination, e.g., "Select your destination." Then, the user voices a destination such as "Korea Bank" in the microphone (MIC). The voice recognition device 50 analyzes, in step 303, the destination voice inputted through the microphone (MIC) in order to extract the destination. Then, in step 305, the voice recognition device 50 searches the recent destination list and the user's destination list stored in the user's voice recognition database 71 to determine if there is voice recognition data corresponding to the destination. If the voice recognition data is searched out, the voice recognition device 50 goes to step 329, or otherwise, it returns to step 309. Namely, if the recent destination list or the user's destination list contains the destination corresponding to the input user's voice, the navigation terminal 100 directly proceeds to step 329 without further searching in order to set the detected destination as the path search destination and to provide the detected path to the user.

Alternatively, if the recent destination list or the user's destination list does not contain the destination corresponding to the inputted user's voice, the voice recognition device 50 produces a guidance voice for requesting input of the first administrative district in step 309. The first administrative district is the highest destination classification reference. Hence, the administrative district begins to more closely approach the destination as it takes higher orders such as the second, third, and so on. For example, the guidance voice for requesting input of the first administrative district may consist of a sentence "Select 'Do' or 'Broad City' covering your destination." Then, the user voices "Do" or "Broad City" as "Seoul", covering the destination. The voice recognition device 50 analyzes, in step 311, the administrative district item voiced by the user in order to reduce the voice data search range for searching the destination in accordance with the inputted administrative district item in step 313. Namely, the voice recognition device 50 temporarily sets the storage region of the voice recognition database 73 allocated for "Seoul" or the voice recognition data having the tag representing "Seoul" as a search range of voice recognition data. In this case, considering possible voice recognition error, the voice recognition device 50 makes the search range cover the voice data representing reference items similar to the pronunciation of "Seoul". Then, in step 315, the voice recognition device 50 produces a guidance voice for requesting input of the next ordered administrative district, e.g., "Select 'Gu' covering your destination." Then the user voices the name of the district as "Kangbuk-Gu", which the voice recognition device 50 analyzes in step 317 in order to further reduce the previous search range in accordance with the second administrative district "Kangbuk-Gu". Then, in step 321, the voice recognition device 50 determines if the previous guidance voice is to request input of the predetermined last ordered administrative district. Namely, if all the predetermined destination classification references are presented by their respective guidance voices for requesting the user to input the destination, the process proceeds to step 323, or otherwise returns to step 315 to repeat the steps 315 to 321. For example, if the predetermined last order is the third, the voice recognition device 50 proceeds to step 315 to produce the guidance voice requesting input of the next reference item "Dong" following "Gu", e.g., "Select "Dong" covering the destination." If the user voices the specific name of "Dong" as "Suyu-Dong", the voice recognition device 50 analyzes the voiced administrative district item "Suyu-Dong" received through the steps 317 to 319 to further reduce the voice data search range relating to "Kangbuk-Gu" to that relating to "Suyu-Dong".

Consequently, the voice recognition device 50 sets, in step 323, the final search range of voice recognition data determined through the steps 309 to 321. Then, the voice recognition device 50 proceeds to step 325 to determine if the voice data corresponding to the destination is contained in the voice recognition data covered by the final search range. If the destination is detected, it proceeds to step 329, or otherwise to step 309 in order to repeat the steps 309 to 325. The final destination as "Korea Bank" is searched out from the voice data covered by the voice data search range relating to "Suyu-Dong". Finally in step 329, the voice recognition device 50 delivers the voice recognition data representing the detected destination to the path calculator 40, which sets the destination as the path search destination to search the destination path provided to the user. Thus, the user may set the path search destination by means of voice recognition.

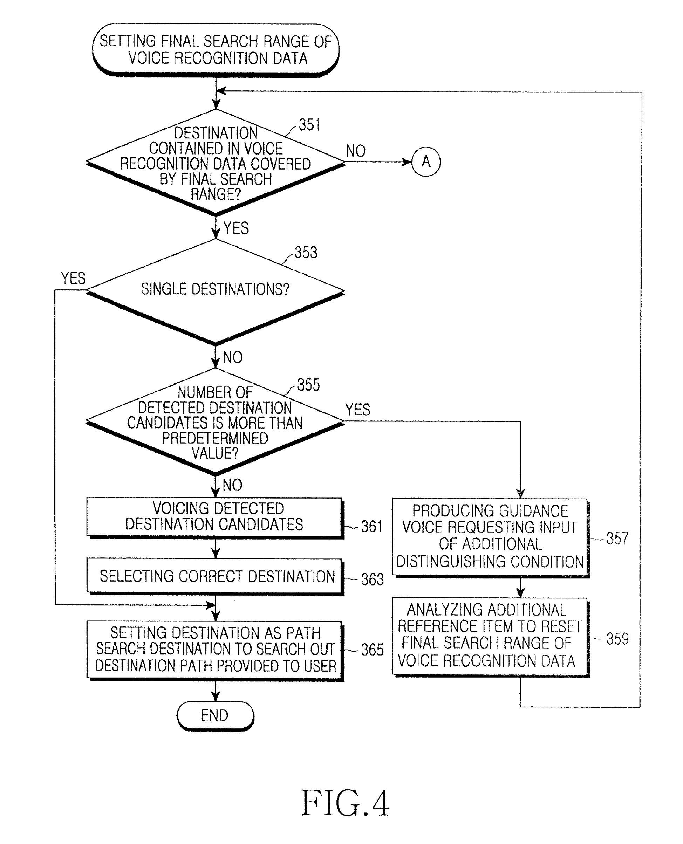

Meanwhile, in step 325, the voice recognition device 50 may detect multiple voice recognition data corresponding to the destination. This is caused by the fact that "Korea Bank" may have several branches in Suyu-Dong, Kangbuk-Gu, in Seoul. This case is described in connection with Fig. 4 for illustrating the process of the navigation terminal after setting the final search range of voice recognition data according to an embodiment of the present invention. After setting the final search range in step 323, the voice recognition device 50 determines if the voice recognition data corresponding to the destination is contained in the voice recognition data covered by the final search range. If the voice recognition data is detected, it proceeds to step 353, or otherwise returns through "A" to step 309 of Fig. 3. The voice recognition device 50 determines, in step 353, if the voice recognition data corresponding to the detected destination represents a single or multiple destination candidates. If it represents a single destination candidate, the process goes to step 365, or otherwise to step 355. Then, if the number of destination candidates is determined, in step 355, to be more than a predetermined value, the voice recognition device 50 proceeds to step 357, or otherwise to step 361. Then the voice recognition device 50 sequentially produces, in step 361, the detected voice recognition data synthesized to voice the multiple destination candidates. In this case, the voice recognition device 50 also produces detailed information to distinguish each destination candidate, namely in the form of "Korea Bank Suyu-1-Dong Branch", "Korean Bank Suyu-2-Dong Branch", etc. Then, the user selects the correct destination. In this case, the user's selection may be performed utilizing key input or voice recognition. Selecting the correct destination through voice recognition, the user may pronounce a repetition of the destination voiced by the navigation terminal, or say "yes" or "no" during the navigation terminal's voicing of the destinations. If the destination is selected in step 363, the voice recognition device 50 proceeds to step 365 to set the selected destination as the path search destination to search out the destination path provided to the user. In this case, although not shown in Fig. 4, if the correct destination is not found among the destination candidates, the user may request that the voice recognition device 50 repeat step 309 of Fig. 3 to step 365 of Fig. 4 for searching the correct destination. Of course, in this new search process, the voice recognition device 50 excludes the voice recognition data corresponding to the faulty destination candidates from the new search range.

Meanwhile, if the number of the destination candidates is determined in step 355 to be more than a predetermined value, the voice recognition device 50 proceeds to step 357 to produce a guidance voice for requesting input of an additional distinguishing condition, which may be a classification reference below the lowest level administrative district in the final search range, or a business category relating to the destination. If the user voices an additional reference item corresponding to the additional classification reference, the voice recognition device 50 analyzes, in step 359, the additional reference item to reset the final search range of the voice recognition data, then returns to step 351 to repeat the previous steps, so that it may set the correct destination as the path search destination to search out the destination path provided to the user.

While the invention has been shown and described with reference to a certain preferred embodiments thereof, it will be understood by those skilled in the art that various changes in form and details may be made therein without departing from the scope of the invention. For example, the navigation terminal 100 may be set according to the conditions proposed by the user concerning the kinds of the destination classification reference, detailed items of the classification reference, priority of the detailed items, etc. Further, by omitting the process of searching the user's voice recognition database 71 for the destination received from the user, the navigation terminal 100 may be set to search the destination only by reducing the search range of the voice recognition data according to the destination classification reference. Thus, the inventive method enables a navigation terminal with limited resources to process several hundreds of thousands of destinations by means of voice recognition by considerably reducing the search range of the voice recognition data according to the destination classification references such as administrative district.

## Claims

1. A method of setting a navigation terminal for a destination utilizing voice recognition, the method comprising the steps of:
producing a guidance voice for requesting a voice input of said destination;
receiving said voice input;
setting said destination as a path search destination if said destination extracted from said voice input is found in a previously stored destination list; and
if said extracted destination is not found in said destination list, causing said navigation terminal to receive a reference item inputted by a user corresponding to at least a destination classification reference for setting a part of a plurality of previously stored destinations corresponding to said reference item as a search range and to search out the destination corresponding to said extracted destination in said search range for setting the extracted destination as said path search destination.

2. The method of in claim 1, wherein said destination list includes at least one of a list containing at least a destination set corresponding to the user's input and a list containing the destination used lately for path search.

3. The method of claim 2, wherein the procedure of searching out the destination corresponding to said extracted destination in said search range includes:
producing a voice representing at least a destination classification reference according to priority if said extracted destination is not found in said destination list;
receiving a reference item voice inputted by the user corresponding to said destination classification reference;
setting a part of a plurality of destinations previously stored corresponding to said reference item extracted from said reference item voice as a search range; and
searching out the destination corresponding to said extracted destination in said search range for setting the extracted destination as said path search destination.

4. The method of claim 3, wherein said destination classification reference is an administrative district.

5. A method of setting a navigation terminal for a destination utilizing voice recognition, the method comprising steps of:
a) producing a guidance voice for requesting a voice input of said destination;
b) receiving said voice input;
c) setting said destination as a path search destination if said destination extracted from said voice input is found in a destination list previously stored;
d) producing a guidance voice for requesting an input of the highest level administrative district if said extracted destination is not found in said destination list, to extract a first administrative district item from a first administrative district item voice input by a user and to set a part of a plurality of destinations previously stored as a path search range by considering corresponding geographic positions with reference to said administrative district item;
e) producing a guidance voice for requesting an input of the next highest level administrative district, to extract a second administrative district item from a second administrative district item voice inputted by the user, and to reduce the path search range by considering the geographic positions of said part of a plurality of destinations with reference to said second administrative district item;
f) repeating the previous step until a final path search range is set corresponding to a lowest prescribed administrative district; and
g) detecting the destination corresponding to said extracted destination in said final search range for setting the extracted destination as said path search destination.

6. The method of claim 5, wherein said destination list includes at least one of a list containing at least a destination set corresponding to the user's input and a list containing the destination used lately for path search.

7. The method of claim 6, wherein each administrative district represents one of province, city, county, district, town, township and neighborhood.

8. The method of claim 7, wherein the step of detecting the destination corresponding to said extracted destination in said final search range includes:
searching out destination candidates corresponding to said extracted destination among the destinations contained in said final search range;
setting the destination candidate as said path search destination if a single destination candidate is searched out;
informing the user of each of the destination candidates if the number of the destination candidates searched out is two or more up to a predetermined value, and then to set the destination candidate selected by the user as said path search destination; and
receiving an additional reference item input by the user if the number of the destination candidates selected exceeds said predetermined value, and then to reset said final search range for searching out the destination corresponding to said extracted destination.

9. The method of claim 8, further including repeating the steps d) to g) excluding said destination candidate from the search range if the user again requests the destination search after searching out said destination candidate.

10. The method of claim 9, wherein said additional reference item represents a lower administrative district or a business category under the lowest administrative district.

11. An apparatus for setting a navigation terminal for a destination utilizing voice recognition, comprising:
a memory part for storing a destination list and a plurality of destinations arranged in voice recognition data format; and
a voice recognition device for producing a guidance voice for requesting a voice input of said destination, extracting said destination from the voice of said destination inputted by a user, delivering said destination as a path search destination to a path calculator if said destination extracted from said voice input is found in said destination list, receiving a reference item input by the user corresponding to at least a destination classification reference if said extracted destination is not found in said destination list, setting a part of said plurality of destinations previously stored corresponding to said reference item as a search range, and searching out the destination corresponding to said extracted destination in said search range delivered to said path calculator to be set as said path search destination.

12. The apparatus of claim 11, wherein said destination list includes at least one of a list containing at least a destination set corresponding to the user's input and a list containing a most lately used destination for path search.

13. The apparatus of claim 12, wherein said voice recognition device produces a voice requesting at least a destination classification reference according to priority if said extracted destination is not found in said destination list, receives a reference item voice inputted by the user corresponding to said destination classification reference, sets a part of said plurality of destinations previously stored corresponding to said reference item extracted from said reference item voice as a search range, and searches out the destination corresponding to said extracted destination in said search range delivered to said path calculator to set as said path search destination.

14. The apparatus of claim 13, wherein said destination classification reference is an administrative district.

15. An apparatus for setting a navigation terminal for a destination utilizing voice recognition, comprising:
a memory part for storing a destination list and a plurality of destinations arranged in voice recognition data format; and
a voice recognition device for producing a guidance voice for requesting a voice input of said destination, delivering the destination corresponding to said extracted destination to a path calculator to set as a path search destination if said destination extracted from said voice input is found in said previously stored destination list, producing a guidance voice for requesting an input of a highest level administrative district if said extracted destination is not found in said destination list, extracting a first administrative district item from a first administrative district item voice input by the user, setting a part of said plurality of destinations previously stored as a path search range by considering corresponding geographic positions with reference to said administrative district item, producing a guidance voice for requesting a input of a next highest level administrative district until a final path search range is set corresponding to a lowest prescribed administrative district, extracting a second administrative district item from a second administrative district item voice inputted by the user, reducing the path search range by considering the geographic positions of said part of said plurality of destinations with reference to said second administrative district item, and detecting the destination corresponding to said extracted destination in said final search range delivered to said path calculator to set as said path search destination.

16. The apparatus of claim 15, wherein said destination list includes at least one of a list containing at least a destination set corresponding to the user's input and a list containing a most lately used destination for path search.

17. The apparatus of claim 16, wherein each administrative district represents one of province, city, county, district, town, township and neighborhood.

18. The apparatus of claim 17, wherein said voice recognition device searches out destination candidates corresponding to said extracted destination among the destinations contained in said final search range, sets the destination candidate as said path search destination if a single destination candidate is searched out, informs the user of each of the destination candidates if the number of the destination candidates searched out is two or more up to a predetermined value, sets the destination candidate selected by the user as said path search destination, receives an additional reference item input by the user if the number of the destination candidates searched out exceeds said predetermined value, and resets said final search range to search out the destination corresponding to said extracted destination delivered to said path calculator to set as said path search destination.

19. The apparatus of claim 18, wherein said additional reference item represents a lower administrative district or a business category under the lowest administrative district.
